Europäisches Patentamt

European Patent Office

Office européen des brevets

(11) Publication number: **0 189 265**
**B1**

# EUROPEAN PATENT SPECIFICATION

(45) Date of publication of the patent specification:
**08.06.88**

(21) Application number: **86300201.0**

(22) Date of filling: **14.01.86**

(51) Int. Cl.⁴: **F 16 K 35/06**

(54) Lockable drive mechanism.

<table>
<tr><td>(30) Priority: <b>15.01.85 GB 8500923</b></td><td>(73) Proprietor: <b>Ellis, Alan Elgar Herbert, 14 Scott Drive Lexden, Colchester Essex CO3 5LE (GB)</b></td></tr>
<tr><td>(43) Date of publication of application:<br><b>30.07.86 Bulletin 86/31</b></td><td>(72) Inventor: <b>Ellis, Alan Elgar Herbert, 14 Scott Drive Lexden, Colchester Essex CO3 5LE (GB)</b></td></tr>
<tr><td>(45) Publication of the grant of the patent:<br><b>08.06.88 Bulletin 88/23</b></td><td rowspan="2">(74) Representative: <b>Gillam, Francis Cyril, SANDERSON & CO. European Patent Attorneys 34, East Stockwell Street, Colchester Essex CO1 1ST (GB)</b></td></tr>
<tr><td>(84) Designated Contracting States:<br><b>AT BE CH DE FR GB IT LI LU NL SE</b></td></tr>
<tr><td>(56) References cited:<br><b>EP-A-0 068 841<br>EP-A-0 073 862<br>FR-A-1 296 930</b></td><td></td></tr>
</table>

LIBER, STOCKHOLM 1988

### Description

This invention relates to a lockable drive mechanism for a rotatable stub projecting from a machine element, and particularly - but not exclusively - to a drive mechanism for a fluid flow control valve (e.g. EP-A-0 068 841); in this particular case the rotatable stub would comprise the valve operating member (the angular movement of which may be limited to less than 360°) and the machine element would comprise the valve body or some other component associated therewith, such as a gear housing.

In order to improve the safety of operation of a chemical processing plant, a pipeline installation or the like, it is frequently desirable to secure a fluid flow control valve at a given setting either open, or closed. Though this may be necessary to prevent the valve changing its setting for example because of vibration, more usually it is to prevent unauthorised operation of the valve or, more importantly, to prevent the valve inadvertently being operated before some other valve also has been operated. For example, it may be most important that the supply of one chemical to a vessel be stopped by closing one valve before a different chemical is supplied, by opening another valve.

In the past, valves have been protected against unauthorised or inadvertent operation by means of a chain passed, a round the valve operating handwheel or lever and some other suitable component (such as the valve body or the pipe in which the valve is fitted), the chain then being secured by means of a conventional key-operated padlock. More recently, there have been many proposals for lock mechanisms which are adapted to be secured to the valve and which are able to prevent rotation of the valve operating member when set to the locked position. Even more recently, there have been several proposals for relatively high security lock arrangements, many of which are designed to fit on to the valve operating member without the need to modify the valve or its body or housing in any way, the lock mechanism being secured to the valve operating member in place of the normal handwheel or other operating lever.

It is a principal object of this invention to provide an improved form of lockable drive mechanism for a rotatable stub, such as a valve operating member projecting from a valve body or housing, which mechanism requires no modification to the machine element from which the rotatable stub projects and which mechanism nevertheless is able to offer good security against unauthorised operation.

Accordingly, this invention provides a lockable drive mechanism for a rotatable stub projecting from a machine element, and comprising a main body adapted to be secured to the rotatable stub to effect turning movement thereof, a lock member mounted for rotation with the main body and being interengageable by a coded key, and means arranged to prevent interengagement of the key with the lock member and the relative separation thereof other than when the lock member has been set at one particular position, which lock mechanism is characterized by the provision of:

a locking ring adapted for coaxial positioning between the machine element and the main body, the locking ring when so positioned engaging a part of the machine element to prevent the rotation of the locking ring with respect to the machine element and the locking ring having a lock surface with at least one abutment region; and a detent on the lock member which detent is engageable with the abutment region to prevent relative rotation between the main body and the locking ring when the main body has been turned appropriately to align the detent with the abutment region but which detent otherwise engages the lock surface to restrain rotation of the lock member, the lock member also having a coded head portion engagable for the rotation thereof only by said key which has a complementary form to said coded head portion, the arrangement being such that when the key is interengageable with or separable from the lock member, the detent thereof is engaged either with the abutment region or with the lock surface.

It will be appreciated that a lockable drive mechanism of this invention may be used for locking various rotatable stubs, besides the rotatable operating member of a fluid flow control valve. For example, the mechanism may be used to secure a rotatable switchoperating member of electrical switch-gear. Nevertheless, in the following further description of the present invention, references will be made exclusively to the use of the invention in connection with fluid flow control valves, though it will be understood that the invention may be used in other circumstances.

When the lockable drive mechanism is to be arranged for securing to a fluid flow control valve, the main body of the mechanism is attached to the valve operating member (spindle or nut, as appropriate for the valve design), in place of the valve handle or operating lever and the arrangement preferably is such that no modification is required to any part of the valve itself. Conveniently, the main body is of generally cylindrical form and has an axial bore arranged to receive the valve operating member, the main body also having a coaxial counter bore in which may be received a nut or bolt as appropriate to suit the valve operating member so permitting the main body to be secured thereto. Typically, the valve operating member may have a pair of opposed flats extending axially therealong, in which case the bore in the mechanism main body is correspondingly formed such that the main body when secured to the valve operating member is held in a non-rotatable manner with respect thereto. Any other suitable means may be employed to prevent relative rotation between the valve operating member and the main body, as appropriate.

The locking ring of the mechanism advantageously is at least partially received within the main body, and it is preferred for the locking ring wholly to be surrounded by a circumferential wall of the main body. Conveniently there are means to hold the locking ring within the main body other than when the mechanism has been secured to a valve - for example, a pin may extend through a radial bore in the main body and be located in an annular groove provided in a circumferential surface of the locking ring.

When assembled on a valve, the locking ring must be maintained in a non-rotatable manner with respect to the valve body, housing, gear box or the like and for this purpose the locking ring may be provided with one or more appropriately formed recesses or projections engageable with parts of the valve body, housing or the like, so as to prevent rotation of the locking ring. Most conveniently, the radial face of the locking ring on the side thereof furthest from the main body is appropriately profiled to fit closely against the topworks of the valve to which the mechanism is specifically intended to be attached.

In a preferred embodiment, the lock surface of the locking ring is in the form of an annular rib upstanding from the face of the locking ring nearest the mechanism main body, that annular rib being provided with at least one cut-out portion defining said abutment region and the rib being received in an annular channel formed in the main body. The abutment region could instead be defined by at least one recess in the lock surface.

The lock member preferably is received within a bore in the main body extending parallel to the axis of the main body for rotation therewith in, though it would be possible for the lock member to be differently disposed within the main body, for movement to interengage with the locking ring. The detent of the lock member may be provided at or adjacent the end of the member remote from the coded head portion. For the case of an abutment region in the form of a recess, the detent preferably is a cam profile which, with the lock member in one position, may pass over the lock surface hut which then prevents rotation of the lock member; but when the cam profile overlies the recess, the lock member may be turned to engage the cam lobe with the recess. For this preferred arrangement, the lock member may be substantially cylindrical in form, with the cam profile defined by machining away part of the material of the lock members, so as to provide for example a cam profile of generally 'D'-shaped form.

The head portion of the lock member may be coded in a variety of ways, so as to prevent rotation of the lock member other than by a complementarily-formed key. For example, the head portion may have a cylindrical surface with radial projections disposed at coded predetermined angular intervals, the key having a bore in which that cylindrical surface may be received and slots extending axially of the bore at the same pre-determined angular spacings, to receive the projections on the head. An alternative construction would be for the head portion to have projections extending parallel to the member axis, at coded predetermined angular intervals, the end face of the key having appropriately formed recesses for receiving the projections. Of course, this latter arrangement may be reversed, with the projections on the key and recesses on the lock member.

In order to prevent withdrawal of the key from the lock member other than when the lock member has been turned to a particular position, it is preferred for the coded head of the lock member to be disposed wholly within a bore in the main body, and to have a portion of the key also received within that bore when the key is engaged with the coded head of the lock member; then, a generally radial projection may be provided on the outer surface of the key which projection is received in an internal annular channel within the bore, there being but one groove extending axially of the bore from the channel to the end face of the main body along which groove the radial projection of the key must pass in order to enter or leave the annular channel. Generally, such a groove would be provided at a position suitable to prevent withdrawal of the key or the engagement thereof with the coded head of the lock member other than when the lock member has been turned to engage its detent with the abutment region of the lock surface of the lock ring, so locking the main body against turning movement.

The main body may be provided with any appropriate means permitting the rotation thereof, suitable for operating the valve. For example, a radially projecting tommy-bar may be mounted on the main body, to facilitate the rotation thereof when the lock mechanism is in an unlocked condition.

In the foregoing, reference has been made primarily to a lock mechanism which may be locked at one position (for example, in the case of a valve, either fully open, or fully closed, depending upon the design). It will be appreciated that by providing two recesses in the lock surface, the lock mechanism may be locked selectively at either one of two positions, and so with the valve either open or closed, as desired. The mechanism may however further be enhanced, so as to permit its use in an installation having a number of similar lock mechanisms each of which must be operated in a particular, predetermined sequence and each of which must be lockable in both of its open and closed settings, so as to ensure optimum safety and security against unauthorised operation. To this end, the lock mechanism preferably has two angularly-spaced essentially similar lock members provided within the main body, the lock members having differently coded head portions and each arranged so that its key may be withdrawn only when its detent has been engaged with an abutment region in the lock surface of the locking ring. Then, by appropriately disposing the lock members in the main body and the abutment regions of the locking ring lock surface, and also having regard to the angular movement required to operate the valve (typically 90° in the case of a ball valve), the mechanism may be arranged so that the main body may be turned with respect to the locking ring only when both keys have been engaged with their respective lock members and turned to disengage their respective detents with the associated abutment regions; but when the main body has been turned to one extreme position (for example, when the associated valve is open) one of the two lock members may be turned by its associated key to engage its detent with one of the abutment regions, whereafter the key of that lock member may be withdrawn but the other lock member may not be turned so the key engaged therewith is held captive within the main body; and when the lock mechanism has been turned to its other extreme position (for example, when the valve is closed) the other lock member may be turned to lock the main body and the associated key then withdrawn, but the one lock member may not be turned and so its associated key will still held captive.

The preferred construct ion just-described above is most advantageous for a case where more than one valve is to be operated strictly in a predetermined sequence. For example, each of three valves may be locked in the "closed" position, each valve having one key held in its main body. Then, when it is desired to operate all three valves, an operator is given a key which fits the "free" lock member of the first valve to be opened, but no other "free" lock member. Using this key, he may unlock the first valve lock mechanism, operate the valve and then remove the other key of that lock mechanism. By appropriate coding of the heads, that key may fit the "free" lock member of the second valve to be operated but not the third; and after operating the second valve using this key and taking the key then freed to the third valve, that valve also may be opened. Finally, possession of the key which may be removed from the third valve following the opening thereof may be used to demonstrate that all three valves have been opened, and in the correct order.

By way of example only, one specific embodiment of this invention particularly adapted for use in connection with a ball valve for fluid flow control will now be described in detail, reference being made to the accompanying drawings, in which:

Figure 1 is an exploded view, partially cut away as appropriate for clarity, of the lock mechansim of this invention; and

Figure 2 is a vertical sectional view through the lock mechanism of Figure 1.

The lock mechanism illustrated in the drawings is intended to be fixed to a ball valve the topworks of which are illustrated diagrammatically at 10 and include a valve housing 11 and a rotatable operating member 12 projecting from that housing. The operating member 12 has a pair of opposed flats 14 extending parallel to the member axis and also a threaded bore 13, which together permit the attachment of an operating lever to the operating member 12, in a secure non-rotatable manner with respect to that operating member. The topworks 10 also include a washer 15 mounted in a non-rotatable manner on the operating member 12 and held in position by a circlip 16, and a stop 17 secured to the housing 11, the washer 15 being appropriately profiled for interengagement with the stop 17 so as to limit angular movement, of the operating member 12 to 90°, corresponding to the "open" and "closed" settings of the valve.

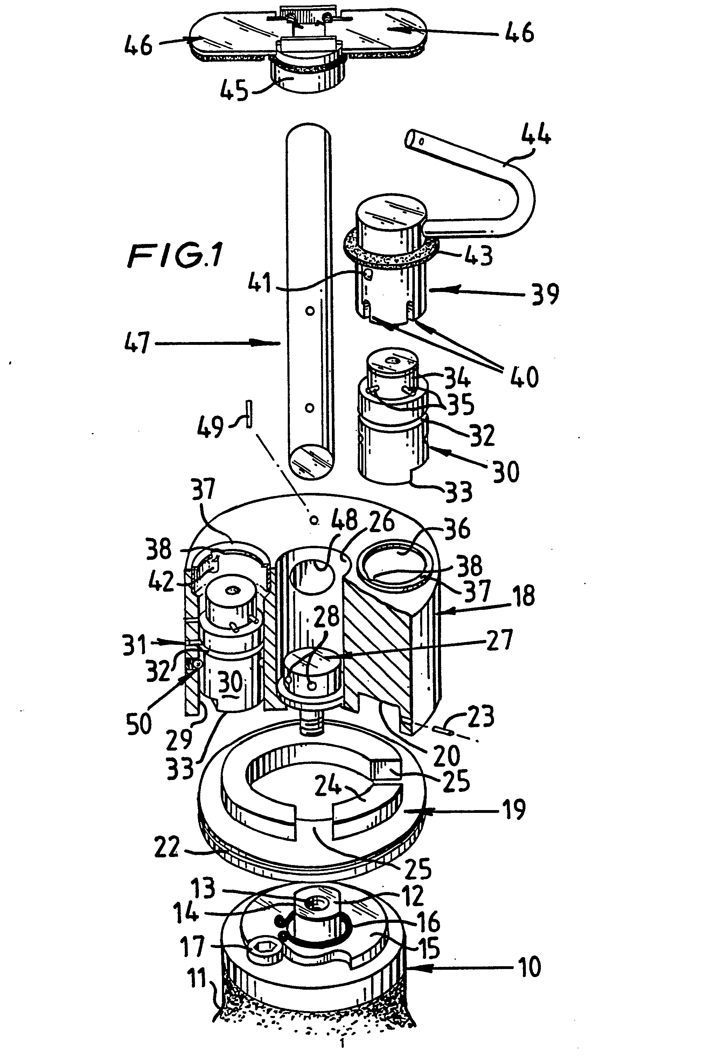

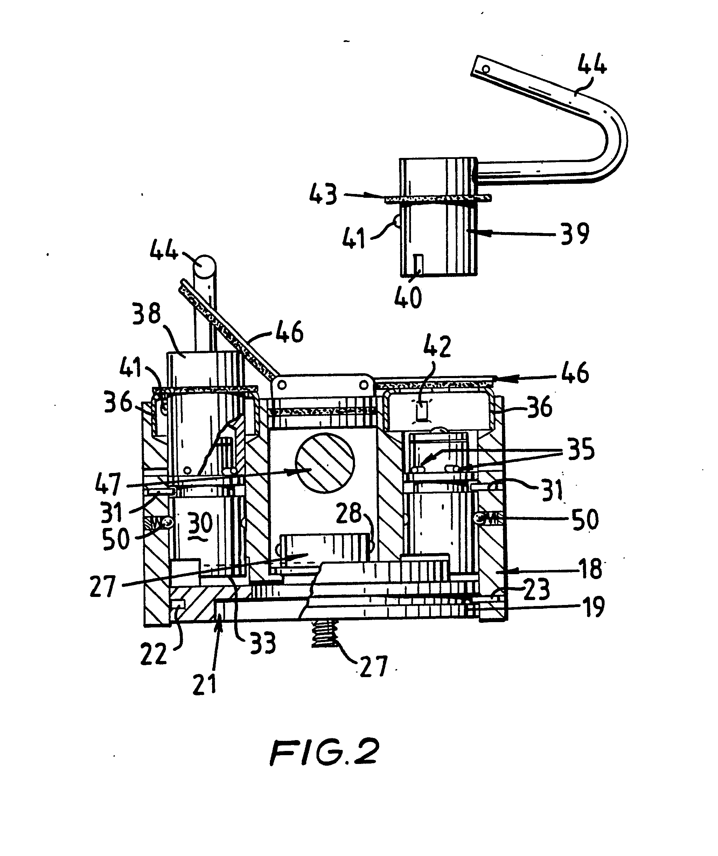

The lock mechanism itself comprises a main body 18 adapted to be secured to the operating member 12 of the valve, and a locking ring 19, which is rotatably mounted within an annular channel 20 provided in the lower end face of the main body 18 and which is suitably profiled to fit closely against, the topworks of the valve. The locking ring 19 includes a notch 21 (Figure 2) provided in its lower face, which notch fits closely against stop 17 so that the locking ring 19 thereby is held against rotation when the lock mechanism is fitted to a valve. The outer cylindrical surface of the locking ring 19 has an annular groove 22 formed therein, there being three pins 23 (only one of which is visible in Figures 1 and 2) extending through radial bores provided in the main body 18 and received in the groove 22, thereby to hold the main body 18 and the locking ring 19 against axial separation, whilst permitting relative rotation therebetween. Also provided on the locking ring is an annular rib 24 upstanding from the upper face thereof, received in channel 20, which rib has two recesses 25, defined by cut-out portions in the rib 24.

The main body 18 has a bore 26 extending axially of the body and provided with an opening at its lower end suitable to permit the mounting of the main body 18 on the operating member 12, in a non-rotatable manner with respect to the operating member. The main body 18 is secured to the operating member 12 by means of a tamper-proof screw 27 having a cylindrical head provided with coded projections 28 around the periphery thereof, whereby the screw may be released (or tightened) solely by means of an elongate key (not shown) having a bore adapted to receive both the cylindrical head and the projections 28.

Also provided in the main body 18 are two parallel bores 29, in each of which is rotatably mounted an associated lock member 30, each held against axial movement by means of a respective pin 31 positioned in a radial bore in the main body 18 and received in an annular groove 32 in the lock member. In each case, the lower end portion of the lock member 30 projects into

**0 189 265**

the channel 20 in the main body 18, but part of the lower end of the lock member is machined away thereby to define a cam lobe 33. In this way, appropriate angular positioning of the lock member enables the cam lobe 33 and the upstanding rib 24 to lie alongside one another within the channel 20, the main body 18 then being rotatable with respect to the locking ring 19. However, on alignment of a recess 25 with a lock member 30, the lock member may be rotated so as to position its cam lobe 33 within the recess 25, so locking the main body 18 against rotation with respect to the locking ring 19.

The upper end of each lock member 30 has a cylindrical head portion 34 of lesser diameter than the bore 29 in the main body, the cylindrical head portion having at least two radial projections 35 disposed at predetermined coded angular intervals. Above the head portion 34 of the lock member, each bore 29 is counterbored to a larger diameter, and pressed into that counterbore is a sleeve 36 having an in-turned flange 37, a notch 38 being formed in that flange.

Each lock member is rotatable only by means of an appropriately formed key 39 having a cylindrical body bored from one end to a suitable diameter to receive the head portion 34 of the lock member with which the key is to engage, the key 39 also having an appropriate number of slots 40 disposed at suitable angular positions to receive the projections 35. On the outer surface of each key, there is provided a projection 41 able to pass through the notch 38 in the in-turned flange 37 of the sleeve 36, but which projection 41 serves to prevent removal of a key from the main body 18 other than when that projection 41 is aligned with the notch 38. The sleeve may also be deformed inwardly as shown at 42, at least at one position, whereby interference between the inwardly deformed portion and the projection 41 on the key will limit the possible angular movement of the key.

Each key has an operating handle 44 and a resilient weather-seal 43 fitted around its cylindrical body. The main body 18 is provided with a guard arrangement to prevent the ingress of foreign matter into the bores 29, comprising a boss 45 for press-fitting into bore 26 of the main body 18 and having a pair of spring-loaded flaps 46 arranged to overlie the sleeves 36, the flaps 46 having a resilient facing on their lower sides. The main body 18 is completed by means of a tommy-bar 47 received in a diametral bore 48, which bar is held in place by means to two pins 49, each pressed into a suitable bore in the main body.

Part-way along the length of each lock member bore 29, there is a radial bore in the main body 18 in which is disposed a ball 50 spring urged to engage the adjacent lock member. Indents are provided in the lock member partially to receive the balls whereby rotation of the lock member is resisted other than when positively turned by a key 39.

It will be appreciated that the locking mechanism described above may be fitted to a valve following the removal of the hand wheel or other operating lever of that valve, but without the need to make any modifications to the valve itself. It is fitted simply by lowering the main body 18 and locking ring 19 combination on to the valve, engaging the notch 21 of the locking ring with stop 17 and the main body with the operating member 12, and then tightening the screw 27 into the threaded bore 14. The key for turning the screw 27 is then withdrawn, the tommy bar 47, fitted into the diametral bore 48 and secured into position by means of pins 49, and the weather guard arrangement pressed into place in the bore 26.

The valve mechanism should be fitted as described above with both keys 39 present, engaged with the respective lock members 30, and so with those lock members turned to permit free angular movement between the main body 18 and the locking ring 19. With the lock members so positioned, the keys may not be withdrawn from the bores 29, in each case by virtue of the interengagement between the key projection 41 and the in-turned flange 37 of the sleeve 36.

Then, when the valve has been turned to one extreme position, one of the lock members will be aligned with a recess 25 and so that lock member may be turned to engage its cam lobe 33 with the recess; thereafter that key may be withdrawn from the lock mechanism. Interengagement of the cam lobe 33 of the other lock member with the rib 24 will however prevent rotation of the other lock member and so its key may not be withdrawn from the mechanism.

To turn the valve to its other setting, it is necessary first to free the interengagement between the one lock member 30 and the locking ring 19, using the appropriate key. Then, when the valve has been set at its other extreme position, the other key may be withdrawn, but not the key just used to release the valve from its first setting.

## Claims

1. A lockable drive mechanism for a rotatable stub (12) projecting from a machine element (10) and comprising a main body (18) adapted to be secured to the rotatable stub to effect turning movement thereof, a lock member (30) mounted for rotation with the main body and being interengageable by a coded key, (39) and means arranged to prevent interengagement of the key with the lock member and the relative separation thereof other then when the lock member has been set at one particular position, <u>characterised in that:</u> there is a locking ring (19) adapted for coaxial positioning between the machine element (10) and the main body (18), the locking ring (19) when so positioned engaging a part of the machine element to prevent the rotation of the locking ring with respect to the machine element and the locking ring having a lock surface (24) with at least one abutment region (25); and

there is a detent (33) on the lock member (30) which detent is engageable with the abutment region (25) to prevent relative rotation between the main body (18) and the locking ring (19) when the main body has been turned appropriately to align the detent with the abutment region but which detent (33) otherwise engages the lock surface (24) to restrain rotation of the lock members the lock member also having a coded head portion (34) engageable for the rotation thereof only by said key (39) which has a complementary form to said coded head portion, the arrangement being such that when the key (39) is interengageable with or separable from the lock member (30), the detent (33) thereof is engaged either with the abutment region (25) or with the lock surface (24).

2. A lockable drive mechanism according to claim 1, characterised in that the lock surface of the locking ring (19) is in the form of an annular rib (24) upstanding from the face of the locking ring nearest the mechanism main body (18), the annular rib (24) being provided with at least one cut-out portion (25) defining said abutment region and the rib (24) being received in an annular channel (20) formed in the main body.

3. A lockable drive mechanism according to claim 1 or claim 2, further characterised in that the lock member (30) is received in a bore (29) in the main body (18) extending parallel to the axis of the main body, the lock member (30) having a cam profile (33) at its end remote from the coded head portion (34), which cam profile (33) may pass over the lock surface (24) so as to prevent rotation of the lock member but which cam profile 33 when aligned with the abutment region (25) may enter there into on turning of the lock member (30), so as therafter to lock the main body (18) to the locking ring (19).

4. A lockable drive mechanism according to any of the preceding claims, further characterised in that two recesses (25) are provided in the lock surface (24), so that the lock mechanism may be locked selectively at either one of two positions.

5. A lockable drive mechanism according to claim 4, further characterised in that the lock mechanism has two angularly-spaced essentially similar lock members (30) having provided within the main body (18), the lock members having differently coded head portions (34) and each arranged so that its key (39) may be withdrawn only when its detent (33) has been engaged with an abutment region (25) in the lock surface (24) of the locking ring (19).

**Patentansprüche**

1. Eine verriegelbare Betätigungsvorrichtung für einen aus einem Maschinenelement (10) hervorragenden drehbaren Zapfen (12), die aus einem Hauptteil (18) besteht, welches an dem drehbaren Zapfen befestigt wird und somit dessen Drehbewegung bewirkt, ein für die Drehung mit dem Hauptteil ausgestattetes und durch einen Codeschlüssel (39) ein- und ausschaltbares Schließelement (30), sowie bestimmte Möglichkeiten zur Verhinderung des Ineinandergreifens und somit zur Trennung von Schlüssel und Schließelement, wenn das Schließelement sich nicht in einer ganz bestimmten Position befindet, die gekennzeichnet ist durch:

einen für die koaxiale Justierung zwischen dem Maschinenelement (10) und dem Hauptteil (18) angefertigten Verschlußring (19), der in dieser Position zwecks Verhinderung seiner Drehung mit dem Maschinenelement in einen Teil desselben eingreift und eine Schließfläche (24) mit mindestens einer Anschlagfläche (25) besitzt; und durch

einen Anschlag (33) auf dem Schließelement (30), der mit der Anschlagfläche (25) koppelbar ist und die Drehung zwischen Hauptteil (18) und Verschlußring (19) verhindert, indem der Hauptteil entsprechend gedreht wird, bis der Anschlag in der Anschlagfläche einrastet; andererseits kann der Anschlag (33) mit der Schließfläche (24) gekoppelt werden, um die Drehung des Schließelements (30) einzuschränken, wobei das Schließelement auch ein kodiertes Kopfteil (34) besitzt, das nur durch genannten Schlüssel (39) zur Drehung gebracht werden kann; der Schlüssel (39) ist in Komplementärform zu besagtem kodierten Kopfteil angefertigt, so daß der Anschlag (33), da der Schlüssel vom Schließelement ein- und auskoppelbar ist, entweder mit der Anschlagfläche (25) oder aber mit der Schließfläche (24) gekoppelt ist.

2. Eine verriegelbare Betätigungsvorrichtung entsprechend Anspruch 1, die dadurch gekennzeichnet ist, daß die Schließfläche des Verschlußrings (19) die Form eines Ringspants (24) hat, welcher sich von der dem Hauptteil (18) nächstliegenden Frontseite des Verschlußrings abhebt, und daß dieser Ringspant (24) mit mindestens einem Schützteil (25), der besagten Anschlagfläche, versehen ist und sich in eine kreisförmige Rille (20) im Hauptteil einpasst.

3. Eine verriegelbare Betätigungsvorrichtung entsprechend Anspruch 1 oder 2, die weiterhin dadurch gekennzeichnet ist, daß das Schließelement (30) sich in eine parallel zur Hauptteilachse verlaufende Bohrung (29) im Hauptteil (18) einpasst und ein Nockenprofil (33) an seinem dem kodierten Kopfteil (34) gegenüberliegenden Endstück hat; dieses Nockenprofil (33) kann auf der Schließfläche (24) zu liegen kommen, um damit die Drehung des Schließelements zu verhindern, oder aber durch Drehen des Schließelements (30) in ihr einklinken, wenn es in der Anschlagfläche (25) eingerastet ist, so daß das Hauptteil (18) dann an den Verschlußring (19) angeschlossen werden kann.

4. Eine verriegelbare Betätigungsvorrichtung entsprechend allen vorher aufgeführten Ansprüchen, die weiterhin dadurch gekennzeichnet ist, daß in der Schließfläche (24) zwei Aushöhlungen (25) vorhanden sind und die Schließvorrichtung in jeder dieser beiden Positionen geschlossen werden kann.

5. Eine verriegelbare Betätigungsvorrichtung entsprechend Anspruch 4, die weiterhin dadurch gekennzeichnet ist, daß die Schließvorrichtung mit zwei kantig abgestuften, im wesentlichen identischen Schließelementen (30) innerhalb des Hauptteils (18) versehen ist, wobei die Schließelemente allerdings unterschiedlich kodierte Kopfteile (34) besitzen und ihr Codeschlüssel (39) nur bei Einkoppelung ihres Anschlags (33) mit einer Anschlagfläche (25) in die Schließfläche (24) des Verschlußrings (19) herausgezogen werden können.

**Revendications**

1. Mécanisme d'entraînement verrouillable pour un bout d'arbre rotatif (12) faisant saillie hors d'un élément de machine (10)et comportant un corps principal (18) adapté pour être fixé au bout d'arbre rotatif afin d'entraîner ce dernier en rotation, un élément formant verrou (30) monté de manière à tourner avec le corps principal et avec lequel peut engrener une clavette codée (39), et des moyens agencés pour empêcher l'engrènement réciproque entre la clavette et l'élément formant verrou et la séparation relative de ces éléments dans des conditions autres que celles dans lesquelles l'élément formant verrou a été placé dans une position particulière, caractérisé en ce que:

- il est prévu un anneau de verrouillage (19) adapté pour être positionné coaxialement entre l'élément de machine (10) et le corps principal (18) et engrenant, lorsqu'il est ainsi positionné, avec une partie de l'élément de machine, ce qui empêche la rotation de l'anneau de verrouillage par rapport à cet élément de machine, l'anneau de verrouillage comportant une surface de verrouillage (24) munie d'au moins une zone de butée (25); et

- il est prévu, sur l'élément formant verrou (30), un dispositif d'arrêt (33) pouvant venir en contact avec la zone de butée (25) de manière à empêcher une rotation relative entre le corps principal (18) et l'anneau de verrouillage (19) une fois que l'on a fait tourner le corps principal de façon appropriée pour aligner le dispositif d'arrêt avec la zone de butée, alors que sinon le dispositif d'arrêt (33) est appliqué contre la surface de verrouillage (24) de manière à limiter la rotation de l'élément formant verrou, cet élément formant verrou comportant également une partie de tête codée (34) avec laquelle peut engrener, pour l'entraînement en rotation de cette partie de tête, seulement ladite clavette (39) qui possède une forme complémentaire de ladite partie de tête codée, l'agencement étant tel que, lorsque la clavette (39) peut engrener avec ou est séparable de l'élément formant verrou (30), le dispositif d'arrêt (33) de ce dernier s'applique soit contre la zone de butée (25), soit contre la surface de verrouillage (24).

2. Mécanisme d'entraînement verrouillable selon la revendication 1, caractérisé en ce que la surface de verrouillage de l'anneau de verrouillage (19) possède la forme d'une nervure annulaire (24) qui s'étend vers le haut à partir de la face de l'anneau de verrouillage, qui est la plus proche du corps principal (18) du mécanisme, la nervure annulaire (24) comportant au moins une partie formant découpe (25), qui définit ladite zone de butée, et étant logée dans un canal annulaire (20) ménagé dans le corps principal.

3. Mécanisme d'entraînement verrouillable selon la revendication 1 ou 2, caractérisé en outre en ce que l'élément formant verrou (30) est logé dans un perçage (29) ménagé dans le corps principal (18) parallèle à l'axe de ce dernier, l'élément formant verrou (30) possédant un profil de came (33) au niveau de son extrémité éloignée de la partie de tête codée (34), lequel profil de came (33) peut passer au-dessus de la surface de verrouillage (24) de manière à empêcher la rotation de l'élément formant verrou mais peut, lorsqu' il est aligné avec la zone de butée (25) pénétrer dans cette zone lors de la rotation de l'élément de verrouillage (30) de manière à verrouiller alors le corps principal (18) sur l'anneau de verrouillage (19).

4. Mécanisme d'entraînement verrouillable selon l'une quelconque des revendications précédentes, caractérisé en outre en ce que deux renfoncements (25) sont ménagés dans la surface de verrouillage (24) de sorte que le mécanisme de verrouillage peut être verrouillé au choix dans l'une ou l'autre de deux positions.

5. Mécanisme d'entraînement verrouillable selon la revendication 4, caractérisé en outre en ce que le mécanisme de verrouillage possède deux éléments formant verrous (30) sensiblement identiques, espacés angulairement et situés à l'intérieur dudit corps principal (18), les éléments formant verrous possédant des parties de tête (34) codées différemment et dont chacune est agencée de telle sorte que sa clavette (39) peut être retirée uniquement lorsque son dispositif d'arrêt (33) est venu en contact avec une zone de butée (25) située dans la surface de verrouillage (24) de l'anneau de verrouillage (19).

0 189 265

FIG.1

FIG.2